# EUROPEAN PATENT SPECIFICATION

(11) **EP 4 152 655 B1**
(45) Date of publication and mention of the grant of the patent: **16.07.2025**
(21) Application number: 21198033.9
(22) Date of filing: 21.09.2021
(51) Int. Cl.: H04J 3/06, H04W 56/00

(54) **MOBILE RADIO COMMUNICATION SYSTEM AND METHOD FOR PROVIDING A TIME-SENSITIVE NETWORKING ETHERNET BRIDGE**
MOBILFUNKKOMMUNIKATIONSSYSTEM UND VERFAHREN ZUR BEREITSTELLUNG EINER ZEITSENSITIVEN VERNETZENDEN ETHERNET-BRÜCKE
SYSTÈME DE COMMUNICATION RADIO MOBILE ET PROCÉDÉ DE FOURNITURE D'UN PONT ETHERNET DE RÉSEAUTAGE SENSIBLES AU TEMPS

(43) Date of publication of application: 22.03.2023
(73) Proprietor: NTT DOCOMO, INC., Chiyoda-Ku Tokyo 100-6150 (JP)
(72) Inventor: MUTIKAINEN, Jari, 80687 Munich (DE); GUERZONI, Riccardo, 80687 Munich (DE); MINOKUCHI, Atsushi, Tokyo, 100-6150 (JP)
(74) Representative: Viering, Jentschura & Partner mbB Patent- und Rechtsanwälte

(56) References cited:
- WO-A1-2020/220747
- HUAWEI ET AL: "TSN Domain and Time Domain", vol. CT WG4, no. E-Meeting; 20200217 - 20200228, 12 February 2020 (2020-02-12), XP051847196, Retrieved from the Internet <URL:https://ftp.3gpp.org/tsg_ct/WG4_protocollars_ex-CN4/TSGCT4_96e_meeting/Docs/C4-200763.zip C4-200763 Vertical_LAN 29.244-TSN Domain and Time Domain.docx> [retrieved on 20200212]
- "5G; Procedures for the 5G System (5GS) (3GPP TS 23.502 version 16.9.0 Release 16)", vol. 3GPP SA, no. V16.9.0, 28 July 2021 (2021-07-28), pages 1 - 617, XP014399955, Retrieved from the Internet <URL:http://www.etsi.org/deliver/etsi_ts/123500_123599/123502/16.09.00_60/ts_123502v160900p.pdf> [retrieved on 20210728]
- "5G; System architecture for the 5G System (5GS) (3GPP TS 23.501 version 16.9.0 Release 16)", vol. 3GPP SA, no. V16.9.0, 28 July 2021 (2021-07-28), pages 1 - 454, XP014399953, Retrieved from the Internet <URL:http://www.etsi.org/deliver/etsi_ts/123500_123599/123501/16.09.00_60/ts_123501v160900p.pdf> [retrieved on 20210728]

## Description

The present disclosure relates to mobile radio communication systems and methods for providing a Time-Sensitive Networking Ethernet bridge.

A mobile radio communication system, such as a 5G mobile radio communication system, may be used to provide a Time-Sensitive Networking (TSN) Ethernet bridge according to IEEE 802.1Q. For bridges according to IEEE 802.1Q functionalities like Cyclic Queuing and Forwarding are provided to enable synchronous traffic deterministic forwarding services.

In such a Time-Sensitive Networking Ethernet bridge data of TSN traffic flows is transported by the radio access network of the mobile radio communication system.

Efficient configuration of the radio access network for this task is desirable.

HUAWEI ET AL: "TSN Domain and Time Domain", 3GPP DRAFT; C4-200763, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. E-Meeting; 20200217 - 20200228 12 February 2020 (2020-02-12) discloses methods and an apparatus for reporting clock drift between a TSN and a 5GS (5th generation mobile communication network) from the UPF and the SMF.

5G; Procedures for the 5G System (5GS) (3GPP TS 23.502 version 16.9.0 Release 16)", ETSI TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA, no. VI 6.9.0 28 July 2021 (2021-07-28), pages 1-617 discloses association procedures to connect time sensitive networks to a 5GS network.

"5G; System architecture for the 5G System (5GS) (3GPP TS 23.501 version 16.9.0 Release 16)", ETSI TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA, ne. VI 6.9.0 28 July 2021 (2021-07-28), pages 1-454, discloses a 5G System extended to support Time sensitive communication as defined in IEEE 802.1 Time Sensitive Networking (TSN) standards.

WO 2020/220747 A1 discloses a TSN service processing method, apparatus and system.

According to one aspect of the present invention, a mobile radio communication system configured to provide a Time-Sensitive Networking Ethernet bridge is provided according to claim 1. Additional features for advantageous embodiments of the present invention are provided in the dependent claims.

According to another aspect of the present invention, a method for providing a Time-Sensitive Networking Ethernet bridge in accordance with claim 10 is provided.

According to a further aspect of the present invention, a computer program and a computer readable medium in accordance with claim 11 is provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system, e.g. a 5G (Fifth Generation) communication network as specified by 3GPP (Third Generation Partnership Project).
- Figure 2: shows an Ethernet bridge implemented by a 5G communication system (5GS).
- Figure 3: illustrates the involvement of a Centralized Network Configuration (CNC) and a TSN Application Function (AF) and further 5GS (Fifth Generation System) components in the provision of an Ethernet bridge implemented by a 5G communication system.
- Figure 4: illustrates the connection of a 5GS Ethernet bridge to multiple time domains.
- Figure 5: shows a flow diagram illustrating a control of a RAN for provision of an Ethernet bridge.
- Figure 6: shows a mobile radio communication system providing a Time-Sensitive Networking Ethernet bridge according to an embodiment.
- Figure 7: shows a flow diagram illustrating a method for providing a Time-Sensitive Networking Ethernet bridge.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

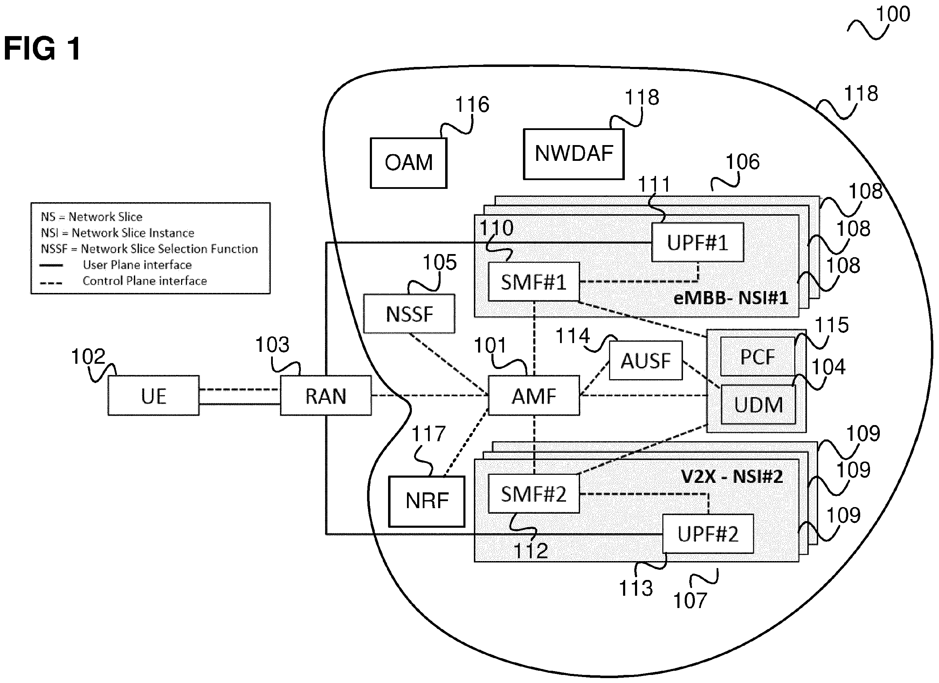

Figure 1 shows a radio communication system 100, e.g. a 5G communication network as specified by 3GPP (Third Generation Partnership Project).

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile (radio) communication network (e.g. a Public Land Mobile communication network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another radio communication standard (e.g. Wi-Fi) but 5G is herein used as an example. Each radio access network node may provide a radio communication with the mobile radio terminal device 102 over an air interface. It should be noted that the radio access network 103 may include any number of radio access network nodes.

The radio communication system 100 further includes a core network 118 including an Access and Mobility Management Function (AMF) 101 connected to the RAN 103, a Unified Data Management (UDM) 104 (which may be paired with a Unified Data Repository (UDR)) and a Network Slice Selection Function (NSSF) 105. Here and in the following examples, the UDM may further consist of the actual UE's subscription database, which is known as, for example, the UDR (Unified Data Repository). The core network 118 further includes an AUSF (Authentication Server Function) 114 and a PCF (Policy Control Function) 115.

The core network 118 may have multiple network slices 106, 107 and for each network slice 106, 107, the operator may create multiple network slice instances (NSIs) 108, 109. For example, the core network 118 includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a network slice is deployed, network functions (NFs) are instantiated, or (if already instantiated) referenced to form a network slice instance (NSI) and network functions that belong to a network slice instance are configured with a network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113.

The core network 118 may further include an NRF (Network Repository Function) 117, which provides network function/network function service registration, network function/network function service discovery. The NRF may have an interface to any network function in the mobile radio communication network side, e.g. have an interface to the AMF 101, the SMFs 110, 112. For simplicity, only the interface between the NRF 117 and the AMF 101 is depicted.

The radio communication system 100 may further include an OAM (Operation, Administration and Maintenance) function (or entity) 116, e.g. implemented by one or more OAM servers which is connected to the RAN 103 and the core network 118 (connections are not shown for simplicity).

Further, the radio communication system 100 may include a NWDAF (Network Data and Analytics Function) 118.

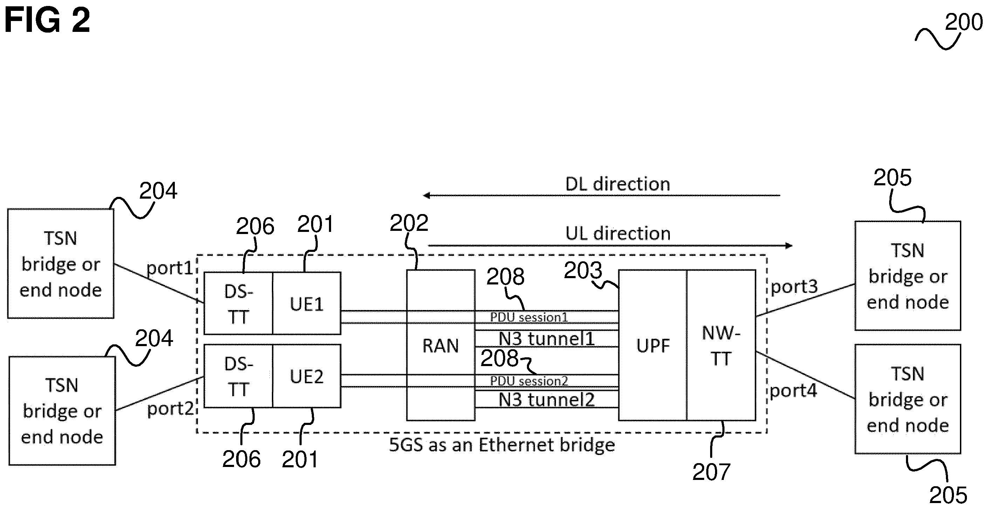

A 5G communication system (abbreviated as 5GS) may in particular be used to provide an Ethernet bridge. This is illustrated in figure 2.

Figure 2 shows an Ethernet bridge 200 implemented by a 5G communication system.

Specifically, the Ethernet bridge 200 is implemented by one or more UEs 201, for example corresponding to UE 102, a RAN 202 (i.e. one or more base stations), for example corresponding to RAN 103 and a UPF 203, for example corresponding to a UPF 111, 113.

The 5G system arrangement (i.e. the arrangement of UEs 201, RAN 202 and UPF 203) is seen as an Ethernet bridge by other TSN nodes 204, 205 (which may themselves be Ethernet bridges). An application is for example in a factory where the UEs are part of mobile robots (acting as TSN end nodes 204) and a stationary robot controller acts as TSN bridge node 205 and is connected via Ethernet with the mobile robots.

Each UE 201 is combined with (i.e. implements) a DS-TT (Device-side TSN translator) 206. It should be noted that that this is only an example and whether DS-TT and UE are combined or are separate is up to implementation.

Each DS-TT 206 implements an Ethernet port to which a next TSN node 204 is connected.

The UPF 203 is combined with (i.e. implements) a NW-TT (Network-side TSN translator) 207. The NW-TT 207 implements one or more Ethernet ports where the next TSN nodes 205 are connected.

Each UE 206 sets up an Ethernet type PDU session 208 towards the UPF 203. Each PDU session 208 is associated with one DS-TT 206. One or more PDU sessions 208 are setup with the UPF 203. The Ethernet type PDU sessions 208 convey Ethernet frames between the UEs 201 and the UPF 203. The UPF 203 (or more specifically the NW-TT 207) routes each Ethernet frame based on its destination MAC (Medium Access Control) address (and VLAN (Virtual Local Area Network) ID) in the frame to the corresponding egress ports. In DL direction the NW-TT 207 routes the frame to a PDU session 208 associated with the corresponding DS-TT port. In UL direction the NW-TT 207 routes the frame to a corresponding NW-TT port.

Thus, when implemented by a 5GS, the IEEE 802.1Q Ethernet bridge functionality is split between NW-TT 207 and DS-TT 206, which are connected via a PDU session 208. In particular, the actions in the frame forwarding process as defined in IEEE 802.1Q are split between DS-TT 206 and NW-TT 207.

A CNC (Centralized Network Configuration) entity in the (bridge-) external TSN network can configure the 5GS virtual bridge 200 via an API (Application Programming Interface) exposed by a TSN Application Function (AF) in the 5GS. The TSN AF distributes the bridge configuration to the UEs 201 (specifically the DS-TTs 206) and the UPF 203 (specifically the NW-TT 207) using a transparent container via PCF 115 and SMF 110, 112.

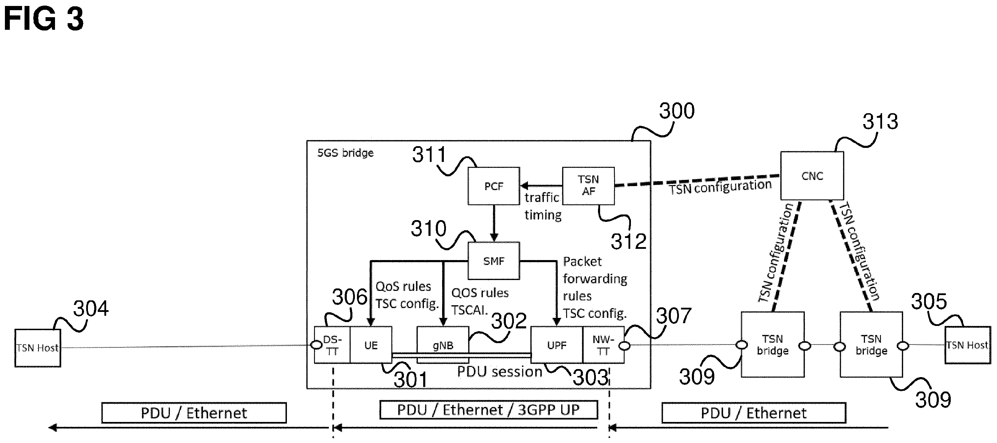

Figure 3 illustrates the involvement of a CNC and a TSN AF and further 5GS components in the provision of an Ethernet bridge 300 implemented by a 5G communication system.

As described with reference to figure 2, the Ethernet Bridge 300 is implemented by a UE 301, a RAN, here represented by a base station 302, and a UPF 303. The UE 301 implements a DS-TT 306. The UPF 303 implements a NW-TT 307.

Further, an SMF 310, e.g. corresponding to SMF 110 or 112, a PCF 311, e.g. corresponding to PCF 115, a TSN AF 312 and a CNC 313 are involved in the implementation and provision of the Ethernet bridge 300.

In this example, the DS-TT 306 is coupled to a first TSN Host 304 (TSN end node) and the NW-TT 307 is coupled via two TSN bridges 309 to a second TSN Host 305 (TSN end node).

The TSN Translators (i.e. DS-TT 306 and NW-TT 307) interconnect the IEEE TSN System and the 5G System. The TTs 306, 307 perform time-aware scheduling and per-stream filtering and policing (PSFP): this includes timing of the TSN traffic streams.

The CNC 313 controls the scheduling of TSN data streams in the 5GS Ethernet bridge 300. The TSN AF 312 maps corresponding configuration information for configuration of the Ethernet bridge 300 from the IEEE data format used to a data format understandable by the 5GS.

The 5GS Ethernet bridge 300 can be connected to multiple TSN time domains.

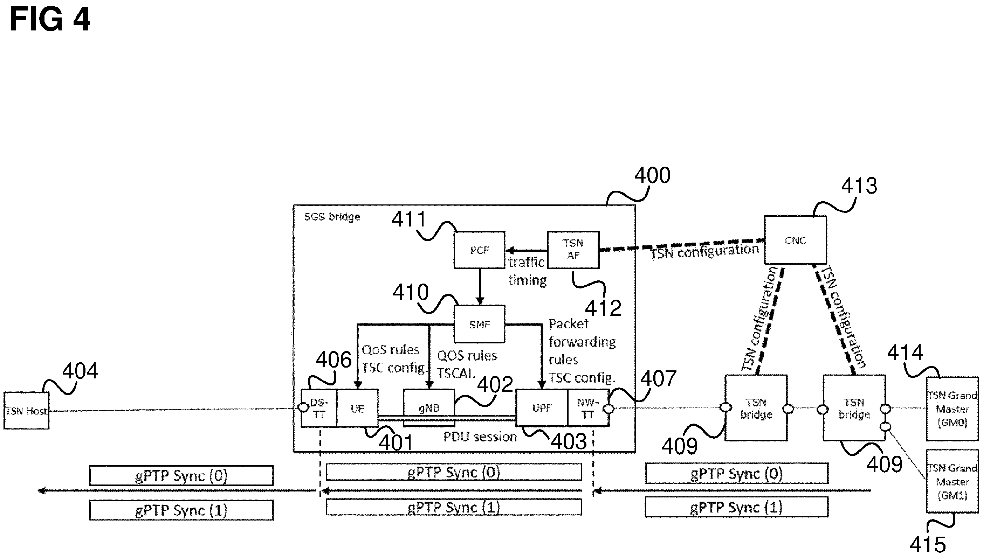

Figure 4 illustrates the connection of a 5GS Ethernet bridge 400 to multiple time domains.

As in figure 3, the 5GS Ethernet bridge 400 is implemented by a UE 401, a RAN, here represented by a base station 402, a UPF 403, an SMF 410, a PCF 411, a TSN AF 412 and a CNC 413. The UE 401 implements a DS-TT 406. The UPF 403 implements a NW-TT 407.

In this example, the DS-TT 406 is coupled to a first TSN Host 404 (TSN end node). The NW-TT 407 is coupled to multiple second TSN Hosts (not shown), in this example via two TSN bridges 409.

The second TSN Hosts are assumed to be part of different TSN time domains. Thus, the Ethernet bridge is connected to multiple TSN time domains. Each time domain has a respective Grand Master (GM) 414, 415 that sends gPTP Sync messages (i.e. synchronisation information). The 5GS processes them independently. Specifically, the DS-TT and NW-TT process the gPTP messages for time synchronization
For example, the first Grand Master 414 is associated with time domain 0 and the second Grand Master 415 is associated with time domain 1.

One time domain (e.g. time domain 0) is the TSN time domain used by the CNC 413. Traffic timing information is given by the TSN AF 312 in this TSN time domain. Accordingly, the traffic scheduling information (of the time-aware scheduling) and PSFP is expressed to the TTs 406, 407 using this time domain. The TTs 406, 407 are synchronized using the 5GS clock. TTs 406, 407 convert the timing in time-aware scheduling and PSFP from the TSN time domain used by the CNC 413 to 5GS time before executing the instructions of time-aware scheduling and PSFP.

The NW-TT 407 (i.e. the UPF 403) measures the clock differences between 5GS time and TSN time, and may report the clock differences to the SMF in clock drifting reports (which may, according to one embodiment, also include clock offset information besides clock drift information or only clock offset information).

The SMF 410 may thus adjust the timing (i.e. in this example Burst Arrival Time (BAT) and Periodicity) for the QoS (Quality of Service) Flows used by the RAN (gNB 402) to forward the traffic based on clock drifting reports provided by the UPF 403. The SMF 410 composes the adjusted timing information into TSC Assistance Information (TSCAI) which it sends to the RAN (gNB 402), along with the QoS information associated with the QoS Flows. The gNB 402 adjusts the timing of the radio resource allocation for QoS Flows based on the TSCAI.

The SMF 410 may indicate the TSN time domains to the UPF 403 for which the SMF 410 wants to receive clock drifting reports. The UPF 403 provides clock drifting reports for each of the indicated TSN time domains to the SMF 410.

However, the SMF 410 does typically not know which is the TSN time domain used by the CNC 413. Therefore, it is not clear which TSN time domains the SMF 410 should indicate to the UPF 403 to be provided with clock drifting reports it may use to adjust the TSCAI that it sends sent to the gNB 402.

For efficiency of operation, the SMF 410 should use the TSN time domain used by the CNC as a basis for TSCAI adjustments. Accordingly, the SMF 410 should indicate this TSN time domain to the UPF 403 to be provided with clock drifting reports. However, while the TSN time domain used by the CNC 413 is configured for the TTs (i.e. the TTs know which time domain is the one used by the CNC 413), this is not known by the SMF 410.

According to various embodiments, the SMF 410 therefore requests the UPF 403 to provide a clock drifting report (or clock drifting reports) for the "configured time domain", i.e. for the time domain for which it is included in the configuration of the NW-TT 407 (and thus also the UPF 403) that this is the time domain used by the CNC 413. The UPF 403 then determines the correct time domain and provides clock difference (drift and/or offset) for that time domain.

If, for example the CNC uses time domain 0, the UPF 403 provides a clock drifting report for time domain 0 in response to the SMF's request to provide a clock drifting report for the "configured time domain".

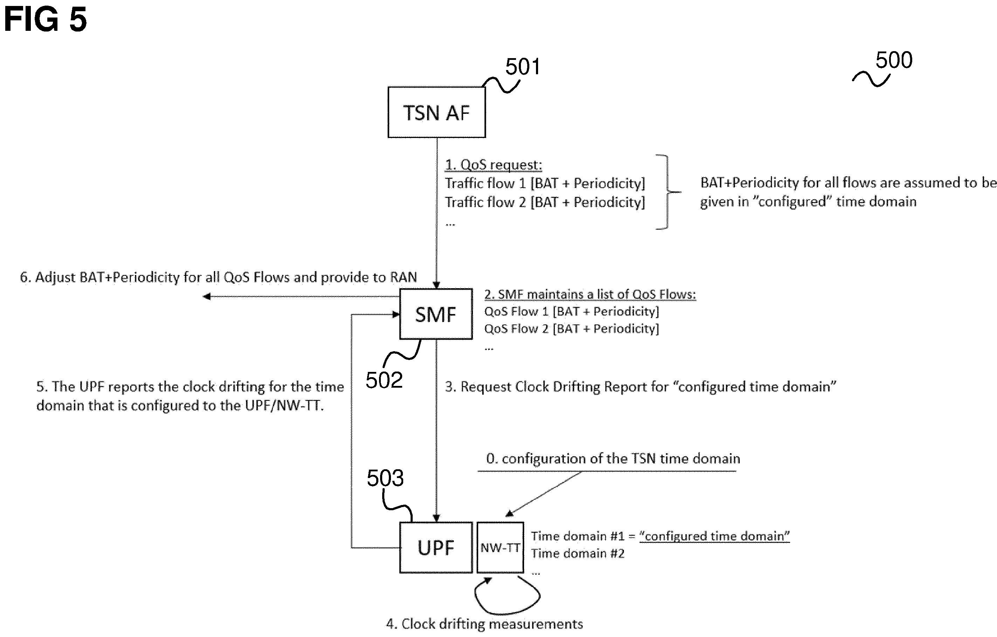

Figure 5 shows a flow diagram 500 illustrating a control of a RAN for provision of an Ethernet bridge.

A TSN AF 501, e.g. corresponding to TSN AF 312, an SMF 502, e.g. corresponding to SMF 310, and a UPF 503, e.g. corresponding to UPF 403, are involved in the flow.

The TSN AF 501 sends QoS requests for multiple TSN traffic flows for which the Ethernet bridge 400 provides QoS flows. For all TSN traffic flows, the TSN AF 501 indicates BAT and periodicity in the "configured time domain", i.e. in the time domain used by the CNC 413.

The SMF 502 maintains a list of the QoS flows with the indicated BAT and periodicity.

The SMF 502 requests a clock drifting report for the "configured time domain" from the UPF 503. The UPF 503 performs clock drifting measurements and provides a clock drifting report for the "configured time domain" to the SMF 502.

The SMF 502 then adjusts BAT and periodicity for all QoS flows in accordance with the information in the clock drifting report and provides this adjusted timing information to the RAN.

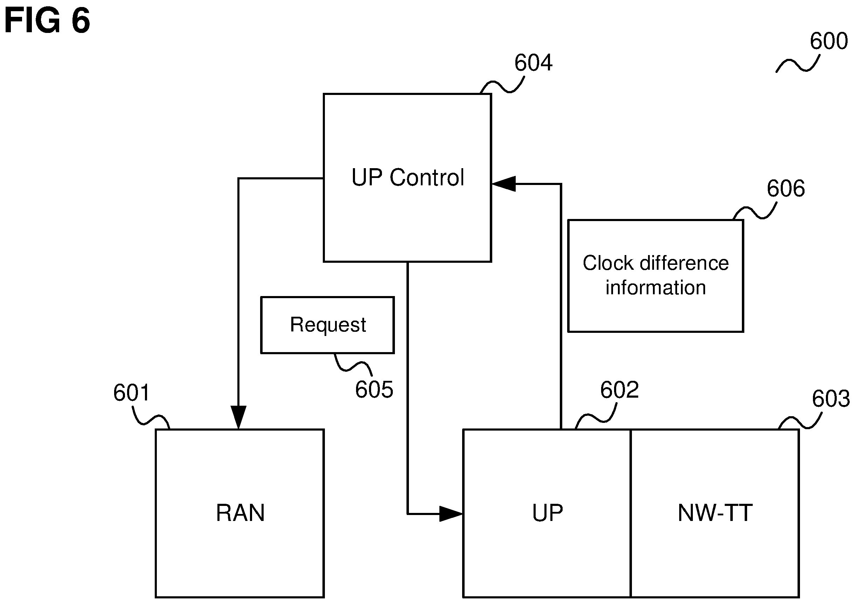

In summary, according to various embodiment, a mobile radio communication system is provided as illustrated in figure 6.

Figure 6 shows a mobile radio communication system 600 providing a Time-Sensitive Networking Ethernet bridge according to an embodiment.

The mobile radio communication system 600 includes a radio access network 601 and a user plane component 602 configured to provide a network-side Time-Sensitive Networking translator 603 for the Time-Sensitive Networking Ethernet bridge.

The mobile radio communication system 600 further includes a user plane control component 604 configured to receive timing information for at least one traffic flow to be communicated via the Time-Sensitive Networking Ethernet bridge, wherein the timing information is specified with respect to a predefined Time-Sensitive Networking time domain of a plurality of time domains for which the mobile radio communication system is configured to receive synchronisation information.

The user plane control component 604 is further configured to send a request 605 to the user plane component for information about a difference between a clock of the predefined Time-Sensitive Networking time domain and a clock of the mobile radio communication system.

The user plane component 602 is configured to determine the time domain among the plurality of time domains corresponding to the predefined time domain, determine information 606 about a difference between the clock of the determined time domain and the clock of the mobile radio communication system and provide the determined information 606 to the user plane control component 604 in response to the request 605.

The user plane control component 604 is configured to configure the radio access network in accordance with the determined information.

According to various embodiments, in other words, a user plane control component (e.g. SMF) requests a user plane component (e.g. UPF) to provide clock drifting (or offset) information between a mobile radio communication system's (internal) clock and TSN time domain in which the user plane control component receives timing information (e.g. from a CNC). The user plane component determines the correct time domain and provides the user plane component with the requested information. The user plane control component does not have knowledge about which time domain of the plurality of time domains is the one in which it receives the timing information and therefore the request does not include a specific indication (such as a number or identity) of the time domain.

The user plane component, however, is configured to derive the correct time domain and provides the user plane control component with the correct clock information.

The approach of figure 6 allows improving the accuracy of the timing of the radio resource allocation for a TSN traffic flow. More accurate timing of the radio resource allocation decreases the latency of the TSN traffic flow since the time to buffer the packet in the UE (UL direction) or gNB (DL direction) decreases.

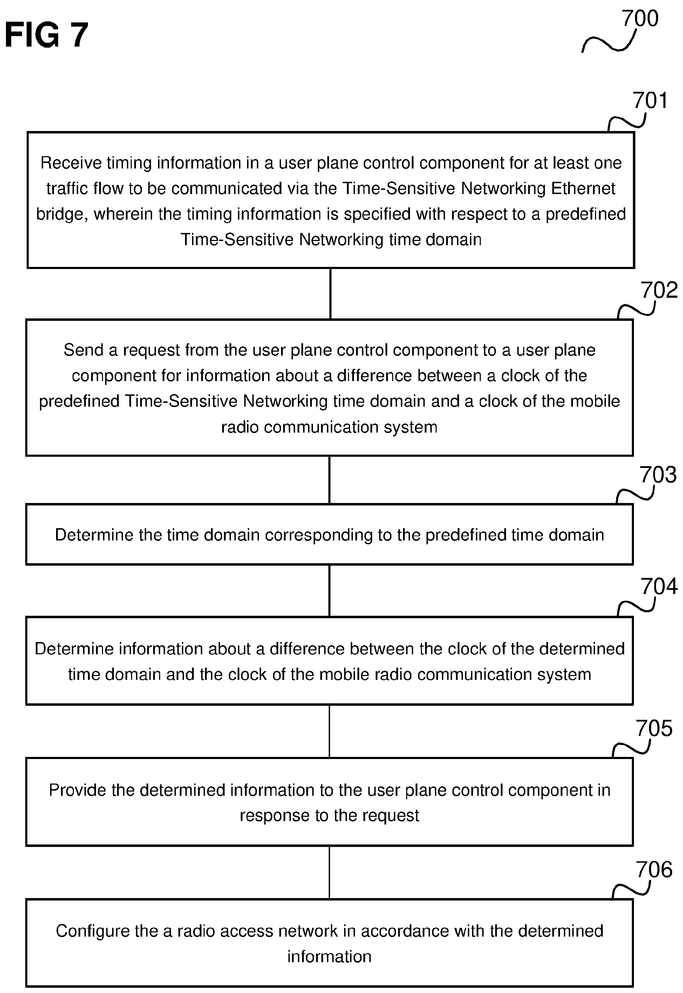

In various embodiments, a method is performed (e.g. by a mobile radio communication system) as illustrated in figure 7.

Figure 7 shows a flow diagram 700 illustrating a method for providing a Time-Sensitive Networking Ethernet bridge.

In 701 a user plane control component receives timing information in for at least one traffic flow to be communicated via the Time-Sensitive Networking Ethernet bridge, wherein the timing information is specified with respect to a predefined Time-Sensitive Networking time domain of a plurality of time domains for which the mobile radio communication system is configured to receive synchronisation information.

In 702 a request is sent from the user plane control component to a user plane component for information about a difference between a clock of the predefined Time-Sensitive Networking time domain and a clock of the mobile radio communication system. The user plane component to which the request is sent is a user plane component that provides a network-side Time-Sensitive Networking translator for the Time-Sensitive Networking Ethernet bridge.

In 703 the user plane component determines the time domain among the plurality of time domains corresponding to the predefined time domain, determines information about a difference between the clock of the determined time domain and the clock of the mobile radio communication system in 704 and provides the determined information to the user plane control component in response to the request in 705.

In 706 the user plane control component configures the a radio access network in accordance with the determined information.

According to various embodiments, in other words, a method for provision of clock drifting information is provided, including the configuration of a time domain number in a user plane entity, the user plane entity receiving a request for clock drifting information between the configured time domain number and an internal clock in a mobile radio communication system from the user plane control entity, the user plane entity, based on the request, measuring clock drifting between the configured time domain number and the internal clock in the mobile system and reporting the measurement to the user plane control entity.

The user plane control entity may maintain timing information for traffic flows and the user plane control entity may adjust the timing information for the traffic flows based on the clock drifting information from the user plane entity.

The mobile radio communication system components may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

## Claims

1. A mobile radio communication system (100) configured to a provide a Time-Sensitive Networking Ethernet bridge (200) and comprising:
A radio access network (103, 202, 601);
A user plane component (111, 103, 203, 602) configured to provide a network-side Time-Sensitive Networking translator (207, 307, 407, 603) for the Time-Sensitive Networking Ethernet bridge (200); and
a user plane control component (502, 604) configured to
receive (701) timing information for at least one traffic flow to be communicated via the Time-Sensitive Networking Ethernet bridge (200), wherein the timing information is specified with respect to a predefined Time-Sensitive Networking time domain of a plurality of time domains for which the mobile radio communication system (100) is configured to receive synchronisation information; and
send (702) a request to the user plane component (111, 103, 203, 602) for information about a difference (606) between a clock of the predefined Time-Sensitive Networking time domain and a clock of the mobile radio communication system (100),
wherein the user plane component (111, 103, 203, 602) is configured to determine (703), in response to the request of the user plane control component (410),
the time domain configured in the network-side Time Sensitive Networking translator (207, 307, 407, 603) among the plurality of time domains corresponding to the predefined Time-Sensitive Networking time domain, determine (704) information about a difference (606) between the clock of the determined time domain and the clock of the mobile radio communication system(100) and provide (705) the determined information to the user plane control component (502, 604) in response to the request; and
wherein the user plane control component (502, 604) is configured to configure (706) the radio access network (103, 202, 601) in accordance with the determined information.

2. The mobile radio communication system (100) of claim 1, wherein the user plane control component (502, 604) is configured to adjust the timing information for the at least one traffic flow in accordance with the determined information and is configured to configure the radio access network (103, 202, 601) in accordance with the adjusted timing information.

3. The mobile radio communication system (100) of claim 2, wherein the user plane control component (502, 604) is configured to configure the radio access network (103, 202, 601) to provide at least one quality of service flow for the at least one traffic flow with the adjusted timing information.

4. The mobile radio communication system (100) of any one of claims 1 to 3, wherein the timing information comprises a burst arrival time and periodicity.

5. The mobile radio communication system (100) of any one of claims 1 to 4, wherein the information about a difference between the clock of the determined time domain and the clock of the mobile radio communication system (100) comprises information about a clock drift between the clock of the determined time domain and the clock of the mobile radio communication system and/or an offset between the clock of the determined time domain and the clock of the mobile radio communication system.

6. The mobile radio communication system (100) of any one of claims 1 to 5, wherein the user plane component is a user plane function, UPF, (111, 103, 203, 602) and wherein the user plane control component (502, 604) is a session management function, SMF, (310, 410, 502).

7. The mobile radio communication system (100) of any one of claims 1 to 6, wherein the user plane component (111, 103, 203 602) is configured to determine the time domain among the plurality of time domains corresponding to the predefined time domain using a local configuration of the user plane component (111, 103, 203, 602).

8. The mobile radio communication system of any one of claims 1 to 7, wherein the user plane component (111, 103, 203, 602) is configured to receive synchronisation information for each time domain of the plurality of time domains.

9. The mobile radio communication system of any one of claims 1 to 8, wherein the mobile radio communication system (100) is a 5G communication system.

10. A method for providing a Time-Sensitive Networking Ethernet bridge (200) by a mobile radio communication system (100), comprising:
receiving timing information in a user plane control component (502, 604) for at least one traffic flow to be communicated via the Time-Sensitive Networking Ethernet bridge (200), wherein the timing information is specified with respect to a predefined Time-Sensitive Networking time domain of a plurality of time domains for which the mobile radio communication system (100) is configured to receive synchronisation information;
sending a request from the user plane control component (502, 604) to a user plane component (111, 103, 203, 602) for information about a difference between a clock of the predefined Time-Sensitive Networking time domain and a clock of the mobile radio communication system (100), wherein the user plane component (111, 103, 203, 602) provides a network-side Time-Sensitive Networking translator (207, 307, 407, 603) for the Time-Sensitive Networking Ethernet bridge (200);
the user plane component (111, 103, 203, 602) determining,
in response to the request of the user plane control component (410),
the time domain configured in the network-side Time-Sensitive Networking translator (207, 307, 407, 603) among the plurality of time domains corresponding to the predefined Time-Sensitive Networking time domain, determining information about a difference (606) between the clock of the determined time domain and the clock of the mobile radio communication system (100) and providing the determined information to the user plane control component (502, 604) in response to the request; and
the user plane control component (502, 604) configuring the a radio access network (103, 202, 601) in accordance with the determined information.

11. A computer program and a computer readable medium including instructions, which, when executed by a computer, make the computer perform the method of claim 10.

## Patentansprüche

1. Ein Mobilfunkkommunikationssystem (100), das so konfiguriert ist, dass es eine Zeitkritische-Vernetzung-Ethernet-Brücke (200) bereitstellt, und das aufweist:
Ein Funkzugangsnetzwerk (103, 202, 601);
eine Benutzer-Ebene-Komponente (111, 103, 203, 602), die so konfiguriert ist, dass sie einen netzwerkseitigen Zeitkritische-Vernetzung-Übersetzer (207, 307, 407, 603) für die Zeitkritische-Vernetzung-Ethernet-Brücke (200) bereitstellt; und
eine Benutzer-Ebene-Steuerkomponente (502, 604), die konfiguriert ist zum
Empfangen (701) von Zeitsteuerungsinformationen für mindestens einen Verkehrsfluss, der über die Zeitkritische-Vernetzung-Ethernet-Brücke (200) kommuniziert werden soll, wobei die Zeitsteuerungsinformationen in Bezug auf eine vordefinierte Zeitkritische-Vernetzung-Zeitdomäne einer Mehrzahl von Zeitdomänen spezifiziert sind, für die das Mobilfunkkommunikationssystem (100) zum Empfangen von Synchronisationsinformationen konfiguriert ist; und
Senden (702) einer Anforderung an die Benutzer-Ebene-Komponente (111, 103, 203, 602) für Informationen über eine Differenz (606) zwischen einer 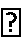 hr der Zeitkritische-Vernetzung-Zeitdomäne und einer 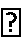 hr des Mobilfunkkommunikationssystems (100),
wobei die Benutzer-Ebene-Komponente (111, 103, 203, 602) so konfiguriert ist, dass sie In Reaktion auf die Anforderung von der Benutzer-Ebene-Steuerkomponente (410), die Zeitdomäne, die in dem netzwerkseitigen Zeitkritische-Vernetzung-Übersetzer (207, 307, 407, 603), unter den mehreren Zeitdomänen, die der vordefinierten Zeitkritische-Vernetzung-Zeitdomäne entsprechen, konfiguriert ist, ermittelt (703), Informationen über eine Differenz (606) zwischen der 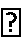 hr der ermittelten Zeitdomäne und der 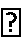 hr des Mobilfunkkommunikationssystems (100) ermittelt (704) und die ermittelten Informationen der Benutzer-Ebene-Steuerkomponente (502, 604) als Reaktion auf die Anforderung bereitstellt (705); und
wobei die Benutzer-Ebene-Steuerkomponente (502, 604) so konfiguriert ist, dass sie das Funkzugangsnetzwerk (103, 202, 601) gemäß den ermittelten Informationen konfiguriert (706).

2. Das Mobilfunkkommunikationssystem (100) nach Anspruch 1, wobei die Benutzer-Ebene-Steuerkomponente (502, 604) so konfiguriert ist, dass sie die Zeitsteuerungsinformationen für den mindestens einen Verkehrsfluss gemäß den ermittelten Informationen anpasst und das Funkzugangsnetzwerk (103, 202, 601) gemäß den angepassten Zeitsteuerungsinformationen konfiguriert.

3. Das Mobilfunkkommunikationssystem (100) nach Anspruch 2, wobei die Benutzer-Ebene-Steuerkomponente (502, 604) so konfiguriert ist, dass sie das Funkzugangsnetzwerk (103, 202, 601) so konfiguriert, dass es mindestens einen Dienstgütefluss für den mindestens einen Verkehrsfluss mit den angepassten Zeitsteuerungsinformationen bereitstellt.

4. Das Mobilfunkkommunikationssystem (100) nach einem der Ansprüche 1 bis 3, wobei die Zeitsteuerungsinformationen eine Burst-Ankunftszeit und eine Periodizität aufweisen.

5. Das Mobilfunkkommunikationssystem (100) nach einem der Ansprüche 1 bis 4, wobei die Informationen über eine Differenz zwischen der 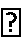 hr der ermittelten Zeitdomäne und der 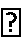 hr des Mobilfunkkommunikationssystems (100) Informationen über eine Taktabweichung zwischen der 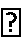 hr der ermittelten Zeitdomäne und der 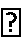 hr des Mobilfunkkommunikationssystems und/oder einen Versatz zwischen der 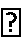 hr der ermittelten Zeitdomäne und der 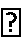 hr des Mobilfunkkommunikationssystems aufweisen.

6. Das Mobilfunkkommunikationssystem (100) nach einem der Ansprüche 1 bis 5, wobei die Benutzer-Ebene-Komponente eine Benutzer-Ebene-Funktion 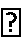 Pf (111, 103, 203, 602) ist und wobei die Benutzer-Ebene-Steuerkomponente (502, 604) eine Sitzungsmanagementfunktion SMF (310, 410, 502) ist.

7. Das Mobilfunkkommunikationssystem (100) nach einem der Ansprüche 1 bis 6, wobei die Benutzer-Ebene-Komponente (111, 103, 203, 602) so konfiguriert ist, dass sie die Zeitdomäne unter den mehreren Zeitdomänen, die der vordefinierten Zeitdomäne entsprechen, unter Verwendung einer lokalen Konfiguration der Benutzer-Ebene-Komponente (111, 103, 203, 602) ermittelt.

8. Das Mobilfunkkommunikationssystem nach einem der Ansprüche 1 bis 7, wobei die Benutzer-Ebene-Komponente (111, 103, 203, 602) so konfiguriert ist, dass sie Synchronisationsinformationen für jede Zeitdomäne der mehreren Zeitdomänen empfängt.

9. Das Mobilfunkkommunikationssystem nach einem der Ansprüche 1 bis 8, wobei das Mobilfunkkommunikationssystem (100) ein 5G-Kommunikationssystem ist.

10. Ein Verfahren zum Bereitstellen einer Zeitkritische-Vernetzung-Ethernet-Brücke (200) durch ein Mobilfunkkommunikationssystem (100), aufweisend:
Empfangen von Zeitsteuerungsinformationen in einer Benutzer-Ebene-Steuerkomponente (502, 604) für mindestens einen Verkehrsfluss, der über die Zeitkritische-Vernetzung-Ethernet-Brücke (200) kommuniziert werden soll, wobei die Zeitsteuerungsinformationen in Bezug auf eine vordefinierte Zeitkritische-Vernetzung-Zeitdomäne einer Mehrzahl von Zeitdomänen, für die das Mobilfunkkommunikationssystem (100) zum Empfangen von Synchronisationsinformationen konfiguriert ist, spezifiziert sind;
Senden einer Anforderung von der Benutzer-Ebene-Steuerkomponente (502, 604) an eine Benutzer-Ebenen-Komponente (111, 103, 203, 602) für Informationen über eine Differenz zwischen einer 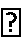 hr der vordefinierten Zeitkritische-Vernetzung-Zeitdomäne und einer 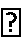 hr des Mobilfunkkommunikationssystems (100), wobei die Benutzer-Ebene-Komponente (111, 103, 203, 602) einen netzwerkseitigen Zeitkritische-Vernetzung-Übersetzer (207, 307, 407, 603) für die Zeitkritische-Vernetzung-Ethernet-Brücke (200) bereitstellt;
wobei die Benutzer-Ebene-Komponente (111, 103, 203, 602) in Reaktion auf die Anforderung der Benutzer-Ebene-Steuerkomponente (410) die in dem netzwerkseitigen Zeitkritische-Vernetzung-Übersetzer (207, 307, 407, 603) konfigurierte Zeitdomäne unter den mehreren Zeitdomänen, die der vordefinierten Zeitkritische-Vernetzung-Zeitdomäne entsprechen, ermittelt, Informationen über eine Differenz (606) zwischen der 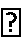 hr der ermittelten Zeitdomäne und der 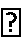 hr des Mobilfunkkommunikationssystems (100) ermittelt und die ermittelten Informationen an die Benutzer-Ebene-Steuerkomponente (502, 604) als Reaktion auf die Anforderung bereitstellt; und
die Benutzer-Ebene-Steuerkomponente (502, 604) das Funkzugangsnetzwerk (103, 202, 601) gemäß den ermittelten Informationen konfiguriert.

11. Ein Computerprogramm und ein computerlesbares Medium mit Anweisungen, die, wenn sie von einem Computer ausgeführt werden, den Computer dazu veranlassen, das Verfahren nach Anspruch 10 auszuführen.

## Revendications

1. Système de radiocommunication mobile (100) configuré pour fournir un pont Ethernet de réseau sensible au temps (200) et comprenant :
un réseau d'accès radio (103, 202, 601) ;
un composant de plan d'utilisateur (111, 103, 203, 602) configuré pour fournir un traducteur de réseau sensible au temps côté réseau (207, 307, 407, 603) pour le pont Ethernet de réseau sensible au temps (200) ; et
un composant de commande de plan d'utilisateur (502, 604) configuré pour
recevoir (701) des informations de synchronisation pour au moins un flux de trafic à communiquer via le pont Ethernet de réseau sensible au temps (200), dans lequel les informations de synchronisation sont spécifiées par rapport à un domaine temporel de réseau sensible au temps prédéfini parmi une pluralité de domaines temporels pour lesquels le système de radiocommunication mobile (100) est configuré pour recevoir des informations de synchronisation ; et
envoyer (702) une demande au composant de plan d'utilisateur (111, 103, 203, 602) pour obtenir des informations concernant une différence (606) entre une horloge du domaine temporel de réseau sensible au temps prédéfini et une horloge du système de radiocommunication mobile (100),
dans lequel le composant de plan d'utilisateur (111, 103, 203, 602) est configuré pour déterminer (703), en réponse à la demande du composant de commande de plan d'utilisateur (410), le domaine temporel configuré dans le traducteur de réseau sensible au temps côté réseau (207, 307, 407, 603) parmi la pluralité de domaines temporels correspondant au domaine temporel de réseau sensible au temps prédéfini, déterminer (704) des informations concernant une différence (606) entre l'horloge du domaine temporel déterminé et l'horloge du système de radiocommunication mobile (100) et fournir (705) les informations déterminées au composant de commande de plan d'utilisateur (502, 604) en réponse à la demande ; et
dans lequel le composant de commande de plan d'utilisateur (502, 604) est configuré pour configurer (706) le réseau d'accès radio (103, 202, 601) conformément aux informations déterminées.

2. Système de radiocommunication mobile (100) selon la revendication 1, dans lequel le composant de commande de plan d'utilisateur (502, 604) est configuré pour ajuster les informations de synchronisation pour ledit au moins un flux de trafic conformément aux informations déterminées et est configuré pour configurer le réseau d'accès radio (103, 202, 601) conformément aux informations de synchronisation ajustées.

3. Système de radiocommunication mobile (100) selon la revendication 2, dans lequel le composant de commande de plan d'utilisateur (502, 604) est configuré pour configurer le réseau d'accès radio (103, 202, 601) afin de fournir au moins un flux de qualité de service pour ledit au moins un flux de trafic avec les informations de synchronisation ajustées.

4. Système de radiocommunication mobile (100) selon l'une quelconque des revendications 1 à 3, dans lequel les informations de synchronisation comprennent un temps d'arrivée de salve et une périodicité.

5. Système de radiocommunication mobile (100) selon l'une quelconque des revendications 1 à 4, dans lequel les informations concernant une différence entre l'horloge du domaine temporel déterminé et l'horloge du système de radiocommunication mobile (100) comprennent des informations concernant une dérive d'horloge entre l'horloge du domaine temporel déterminé et l'horloge du système de radiocommunication mobile et/ou un décalage entre l'horloge du domaine temporel déterminé et l'horloge du système de radiocommunication mobile.

6. Système de radiocommunication mobile (100) selon l'une quelconque des revendications 1 à 5, dans lequel le composant de plan d'utilisateur est une fonction de plan d'utilisateur, UPF, (111, 103, 203, 602) et dans lequel le composant de commande de plan d'utilisateur (502, 604) est une fonction de gestion de session, SMF, (310, 410, 502).

7. Système de radiocommunication mobile (100) selon l'une quelconque des revendications 1 à 6, dans lequel le composant de plan d'utilisateur (111, 103, 203, 602) est configuré pour déterminer le domaine temporel parmi la pluralité de domaines temporels correspondant au domaine temporel prédéfini en utilisant une configuration locale du composant de plan d'utilisateur (111, 103, 203, 602).

8. Système de radiocommunication mobile selon l'une quelconque des revendications 1 à 7, dans lequel le composant de plan d'utilisateur (111, 103, 203, 602) est configuré pour recevoir des informations de synchronisation pour chaque domaine temporel de la pluralité de domaines temporels.

9. Système de radiocommunication mobile selon l'une quelconque des revendications 1 à 8, dans lequel le système de radiocommunication mobile (100) est un système de communication 5G.

10. Procédé pour fournir un pont Ethernet de réseau sensible au temps (200) par un système de radiocommunication mobile (100), comprenant :
la réception d'informations de synchronisation dans un composant de commande de plan d'utilisateur (502, 604) pour au moins un flux de trafic à communiquer via le pont Ethernet de réseau sensible au temps (200), dans lequel les informations de synchronisation sont spécifiées par rapport à un domaine temporel de réseau sensible au temps prédéfini d'une pluralité de domaines temporels pour lesquels le système de radiocommunication mobile (100) est configuré pour recevoir des informations de synchronisation ;
l'envoi d'une demande depuis le composant de commande de plan d'utilisateur (502, 604) vers un composant de plan d'utilisateur (111, 103, 203, 602) pour obtenir des informations sur une différence entre une horloge du domaine temporel de réseau sensible au temps prédéfini et une horloge du système de radiocommunication mobile (100), dans lequel le composant de plan d'utilisateur (111, 103, 203, 602) fournit un traducteur de réseau sensible au temps côté réseau (207, 307, 407, 603) pour le pont Ethernet de réseau sensible au temps (200) ;
le composant de plan d'utilisateur (111, 103, 203, 602) déterminant, en réponse à la demande du composant de commande de plan d'utilisateur (410), le domaine temporel configuré dans le traducteur de réseau sensible au temps côté réseau (207, 307, 407, 603) parmi la pluralité de domaines temporels correspondant au domaine temporel de réseau sensible au temps prédéfini, déterminant des informations concernant une différence (606) entre l'horloge du domaine temporel déterminé et l'horloge du système de radiocommunication mobile (100) et fournissant les informations déterminées au composant de commande de plan d'utilisateur (502, 604) en réponse à la demande ; et
le composant de commande de plan d'utilisateur (502, 604) configurant le réseau d'accès radio (103, 202, 601) conformément aux informations déterminées.

11. Programme informatique et support lisible par ordinateur comprenant des instructions qui, lorsqu'elles sont exécutées par un ordinateur, font que l'ordinateur exécute le procédé selon la revendication 10.
